# EUROPÄISCHE PATENTANMELDUNG

(11) **EP 1 278 046 A2**
(43) Veröffentlichungstag der Anmeldung: **22.01.2003**
(21) Anmeldenummer: 02012912.8
(22) Anmeldetag: 11.06.2002
(51) Int. Cl.: G01F 1/60

(54) **Magnetisch-induktives Durchflussmessgerät**

(30) Priorität: 20.07.2001 DE 10134672
(71) Anmelder: KROHNE MESSTECHNIK GMBH & CO. KG, 47058 Duisburg (DE)
(72) Erfinder: Florin, Wilhelm, Dipl.-Ing., 47198 Duisburg (DE)
(74) Vertreter: Gesthuysen, von Rohr & Eggert

(57) **Zusammenfassung**

Dargestellt und beschrieben ist ein magnetisch-induktives Durchflußmeßgerät für strömende Medien, mit einer Sensoreinheit (1) und einer Auswerte- und Versorgungseinheit (2), wobei die Sensoreinheit (1) ein Meßrohr (3), der Erzeugung eines zumindest im wesentlichen senkrecht zur Meßrohrachse verlaufenden und zeitlich alternierenden Magnetfelds dienende Feldspulen (4) und zwei entlang einer zumindest im wesentlichen senkrecht zur Meßrohrachse und senkrecht zur Magnetfeldrichtung angeordnete Meßelektroden (5) aufweist und die Feldspulen (4) der Sensoreinheit (1) mittels Feldspulenversorgungsleitungen (7) mit der Auswerte- und Versorgungseinheit (2) verbunden sind.

Erfindungsgemäß ist vorgesehen, daß die Sensoreinheit (1) eine Sensordatenspeichereinheit (8) aufweist, in der spezifische Kenngrößen der Sensoreinheit (1) abgespeichert sind und von der die abgespeicherten spezifischen Kenngrößen an die Auswerte- und Versorgungseinheit (2) übertragbar sind. Auf diese Weise ist eine einfache Adaption einer Sensoreinheit (1) an eine neue Auswerte- und Versorgungseinheit (2) oder umgekehrt möglich.

## Beschreibung

Die Erfindung betrifft ein magnetisch-induktives Durchflußmeßgerät für strömende Medien, mit einer Sensoreinheit und einer Auswerte- und Versorgungseinheit, wobei die Sensoreinheit ein Meßrohr, der Erzeugung eines zumindest im wesentlichen senkrecht zur Meßrohrachse verlaufenden und zeitlich alternierenden Magnetfelds dienende Feldspulen und zwei entlang einer zumindest im wesentlichen senkrecht zur Meßrohrachse und senkrecht zur Magnetfeldrichtung angeordnete Meßelektroden aufweist und die Feldspulen der Sensoreinheit mittels Feldspulenversorgungsleitungen mit der Auswerteund Versorgungseinheit verbunden sind.

Magnetisch-induktive Durchflußmeßgeräte der eingangs genannten Art sind schon sei längerer Zeit gut bekannt und werden vielfältig in unterschiedlichen Einsatzgebieten verwendet. Das grundlegende Prinzip eines magnetisch-induktiven Durchflußmeßgeräts für strömende Medien geht dabei zurück auf Farraday, der im Jahre 1832 vorgeschlagen hat, das Prinzip der elektrodynamischen Induktion zur Strömungsgeschwindigkeitsmessung anzuwenden. Nach dem Farradayschen Induktionsgesetz entsteht in einem strömenden Medium, welches Ladungsträger mit sich führt und durch ein Magnetfeld hindurchfließt, eine elektrische Feldstärke senkrecht zur Strömungsrichtung und senkrecht zum Magnetfeld. Das Farradaysche Induktionsgesetz wird bei einem magnetisch-induktiven Durchflußmeßgerät dadurch ausgenutzt, daß ein Magnet, im allgemeinen bestehend aus zwei Magnetpolen mit je einer Feldspule, ein Magnetfeld senkrecht zur Strömungsrichtung in dem Meßrohr erzeugt. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über Meßelektroden abgreifbaren Meßspannung.

Die Meßelektroden werden bei den bekannten magnetisch-induktiven Durchflußmeßgeräten derart ausgeführt, daß sie entweder galvanisch oder kapazitiv mit dem strömenden Medium gekoppelt sind. Ein besonderes Merkmal der magnetisch-induktiven Durchflußmeßgeräte ist die Proportionalität zwischen der Meßspannung und der über den Querschnitt des Meßrohres gemittelten Strömungsgeschwindigkeiten des Medium, d. h. zwischen Meßspannung und Volumenstrom.

Eingangs ist gesagt worden, daß das magnetisch-induktive Durchflußmeßgerät einerseits eine Sensoreinheit und andererseits eine Auswerte- und Versorgungseinheit aufweist. Damit ist gemeint, daß es sich bei der Sensoreinheit einerseits und der Auswerte- und Versorgungseinheit andererseits um zwei körperlich voneinander verschiedene Einheiten handelt. Die wesentlichen Elemente der Sensoreinheit sind dabei das Meßrohr, die Feldspulen und die Meßelektroden, also all die Einrichtungen, die für die Erzeugung und Erfassung des Meßeffekts erforderlich sind. Die Auswerte- und Versorgungseinheit dient dabei einerseits der Versorgung der Feldspulen und andererseits der Auswertung des Meßeffektes, nämlich der zwischen den Meßelektroden induzierten Spannung.

Um nun der Auswerte- und Versorgungseinheit eine quantitative Auswertung der zwischen den Meßelektroden induzierten Spannung zu ermöglichen, also um letztendlich einen Wert für den Durchfluß des durch das Meßrohr strömenden Mediums zu ermitteln, sind spezifische Kenngrößen der Sensoreinheit erforderlich. Bei den aus dem Stand der Technik bekannten magnetisch-induktiven Durchflußmeßgeräten sind diese spezifischen Kenngrößen der Sensoreinheit regelmäßig in der Auswerte- und Versorgungseinheit hinterlegt, nämlich z. B. in einem in der Auswerte- und Versorgungseinheit vorgesehenen EEPROM (Electrically Erasable And Programmable Read Only Memory). Soll nun eine vorhandene Auswerte- und Versorgungseinheit zusammen mit einer neuen Sensoreinheit verwendet werden, so ist die Neueingabe der spezifischen Kenngrößen der Sensoreinheit in das in der Auswerte- und Versorgungseinheit vorgesehene EEPROM erforderlich. Die spezifischen Kenngrößen der Sensoreinheit sind typischerweise auf einem an der Sensoreinheit angebrachten Typenschild festgehalten, so daß eine Eingabe dieser spezifischen Kenngrößen von Hand möglich ist. Dies ist jedoch relativ aufwendig und verhältnismäßig fehleranfällig. Dies gilt insbesondere, da zukünftig voraussichtlich noch mehr spezifische Kenngrößen für die Sensoreinheit erforderlich sein werden als bisher.

Um diesem Problem abzuhelfen, sind magnetisch-induktive Durchflußmeßgeräte entwickelt worden, die eine Auswerte- und Versorgungseinheit aufweisen, in der mehrere EEPROMs eingebaut sind, wobei ein bestimmtes EEPROM nur für die spezifischen Kenngrößen der Sensoreinheit vorgesehen ist. Wird nun eine bestehende Sensoreinheit in Kombination mit einer neuen Auswerte- und Versorgungseinheit eingesetzt, so muß lediglich das EEPROM ausgetauscht werden, in dem die spezifischen Kenngrößen der Sensoreinheit abgespeichert sind. Wird jedoch bei bestehender Auswerte- und Versorgungseinheit eine neue Sensoreinheit verwendet, müssen die spezifischen Kenngrößen weiterhin von Hand eingegeben werden.

Dementsprechend ist es die Aufgabe der Erfindung, ein solches magnetisch-induktives Durchflußmeßgerät anzugeben, bei dem eine Sensoreinheit auf einfache Weise mit einer Auswerte- und Versorgungseinheit kombinierbar ist.

Das erfindungsgemäße magnetisch-induktive Durchflußmeßgerät, mit dem die zuvor hergeleitete und aufgezeigte Aufgabe gelöst ist, ist ausgehend von dem eingangs beschriebenen magnetisch-induktiven Durchflußmeßgerät dadurch gekennzeichnet, daß die Sensoreinheit eine Sensordatenspeichereinheit aufweist, in der spezifische Kenngrößen der Sensoreinheit abgespeichert sind und von der die abgespeicherten spezifischen Kenngrößen an die Auswerte- und Versorgungseinheit übertragbar sind.

Erfindungsgemäß ist also vorgesehen, die Sensordatenspeichereinheit von der Auswerte- und Versorgungseinheit, wo nämlich die in der Sensordatenspeichereinheit abgespeicherten spezifischen Kenngrößen der Sensoreinheit benötigt werden, zu trennen. Die Sensordatenspeichereinheit wird nun im Bereich der Sensoreinheit vorgesehen, so daß die Sensoreinheit ihre spezifischen Kenngrößen immer "bei sich trägt" und aufgrund der Übertragungsmöglichkeit der spezifischen Kenngrößen an eine mit der Sensoreinheit verbundene Auswerte- und Versorgungseinheit jederzeit eine einfache Adaption einer bestehenden Sensoreinheit an eine neue Auswerte- und Versorgungseinheit oder umgekehrt möglich ist, ohne daß von Hand spezifische Kenngrößen der Sensoreinheit eingegeben werden müssen.

Gemäß einer bevorzugten Weiterbildung der Erfindung ist vorgesehen, daß die in der Sensoreinheit vorgesehene Sensordatenspeichereinheit einen Speicher und eine Ansteuerelektronik für den Speicher aufweist. Ganz besonders bevorzugt wird dabei der Speicher der Sensordatenspeichereinheit von einem EEPROM gebildet.

Es gibt verschiedene Möglichkeiten, die Sensordatenspeichereinheit mit der Auswerte- und Versorgungseinheit zu verbinden. Gemäß einer bevorzugten Weiterbildung der Erfindung ist jedoch vorgesehen, daß die Sensordatenspeichereinheit mittels der Feldspulenversorgungsleitungen mit der Auswerte- und Versorgungseinheit verbunden ist.

Grundsätzlich können die in der Sensordatenspeichereinheit abgespeicherten spezifischen Kenngrößen von der Sensordatenspeichereinheit über eigens dafür vorgesehene Leitungen oder über die Leitungen an die Auswerte- und Versorgungseinheit übertragen werden, die für die Übertragung der zwischen den Meßelektroden induzierten Meßspannung an die Auswerte- und Versorgungseinheit vorgesehen sind. Gemäß einer bevorzugten Weiterbildung der Erfindung ist jedoch vorgesehen, daß die abgespeicherten spezifischen Kenngrößen von der Sensordatenspeichereinheit über die Feldspulenleitungen an die Auswerte- und Versorgungseinheit übertragbar sind. Ganz besonders bevorzugt erfolgt dabei die Übertragung der spezifischen Kenngrößen in Form von Spannungsmodulationen.

Gemäß bevorzugter Weiterbildungen der Erfindung kann vorgesehen sein, daß die Sensordatenspeichereinheit mit den Feldspulen in Reihe oder parallel zu diesen geschaltet ist. Ist die Sensordatenspeichereinheit in Reihe mit den Feldspulen geschaltet, ist vorzugsweise vorgesehen, daß während des Betriebs der Feldspulen mit einem alternierenden Magnetfeld die Sensordatenspeichereinheit eine geringe Impedanz aufweist. Auf diese Weise wird die in der Sensordatenspeichereinheit anfallende Verlustleistung gering gehalten und der Feldspulenkreis wird möglichst wenig beeinflußt. Andererseits ist dann, wenn die Sensordatenspeichereinheit zu den Feldspulen parallel geschaltet ist, vorzugsweise vorgesehen, daß die Sensordatenspeichereinheit während des Betriebs der Feldspulen mit einem alternierenden Magnetfeld eine hohe Impedanz aufweist, um ebenfalls die zuvor angesprochenen Vorteile zu erzielen.

Um schließlich eine möglichst universelle Verwendung der Sensoreinheit zu gewährleisten, ist gemäß einer bevorzugten Weiterbildung der Erfindung vorgesehen, daß die Sensordatenspeichereinheit in Hochtemperaturtechnologie ausgeführt ist. Damit ist ein Einsatz der Sensordatenspeichereinheit auch bei sehr hohen Temperaturen, nämlich in Verbindmit ung z. B. sehr heißer Flüssigkeiten, möglich.

Im einzelnen gibt es nun eine Vielzahl von Möglichkeiten, das erfindungsgemäße magnetisch-induktive Durchflußmeßgerät auszugestalten und weiterzubilden. Dazu wird auf die dem Patentanspruch 1 nachgeordneten Patentansprüche sowie auf die folgende Beschreibung bevorzugter Ausführungsbeispiele der Erfindung unter Bezugnahme auf die Zeichnung verwiesen.

In der Zeichnung zeigt
- Fig. 1: schematisch den Aufbau eines magnetisch-induktiven Durchflußmeßgeräts gemäß einem bevorzugten Ausführungsbeispiel der Erfindung,
- Fig. 2: schematisch den Aufbau einer Sensordatenspeichereinheit gemäß einem bevorzugten Ausführungsbeispiel der Erfindung, und
- Fig. 3: schematisch den Arbeitsablauf einer Sensordatenspeichereinheit gemäß einem bevorzugten Ausführungsbeispiel der Erfindung.

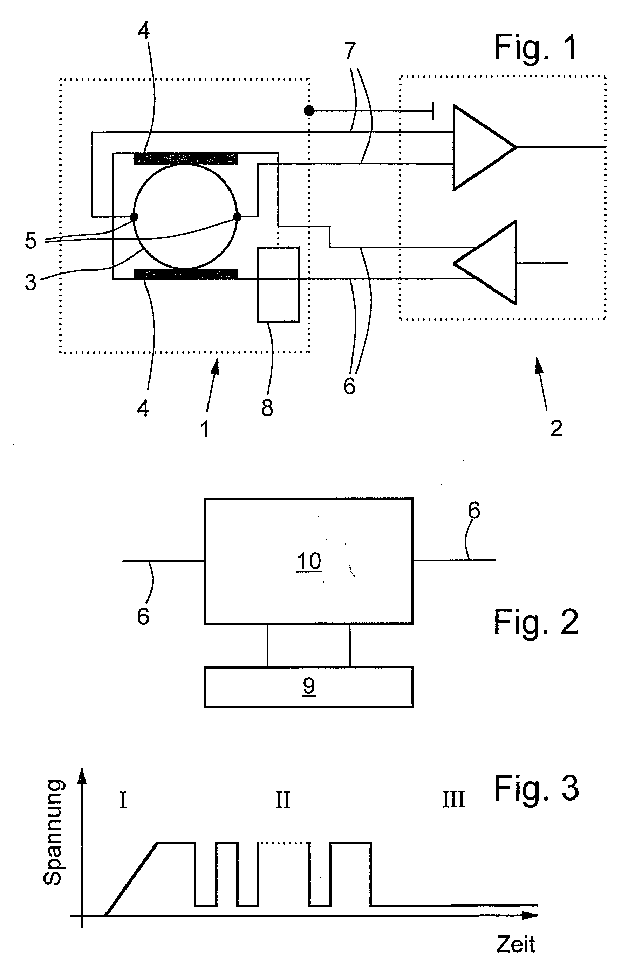

Aus Fig. 1 ist schematisch der Aufbau eines magnetisch-induktiven Durchflußmeßgeräts gemäß einem bevorzugten Ausführungsbeispiel der Erfindung ersichtlich. Das magnetisch-induktive Durchflußmeßgerät weist eine Sensoreinheit 1 sowie eine Auswerte- und Versorgungseinheit 2 auf. Bestandteil der Sensoreinheit 1 sind ein nur angedeutetes Meßrohr 3, zwei Feldspulen 4 und zwei Meßelektroden 5. Mit den Feldspulen 4 wird im Betrieb des magnetisch-induktiven Durchflußgeräts gemäß dem dargestellten bevorzugten Ausführungsbeispiel der Erfindung ein zeitlich alternierendes Magnetfeld erzeugt, typischerweise ein getaktetes Gleichfeld, das im wesentlichen senkrecht zur Meßrohrachse verläuft. Damit wird im strömenden Medium eine Spannung induziert, die mit Hilfe der Meßelektroden 5 abgegriffen wird, die längs einer im wesentlichen senkrecht zur Meßrohrachse und ebenfalls senkrecht zur Magnetfeldrichtung verlaufenden Verbindungslinie angeordnet sind. Die Feldspulen 4 sind mit der Auswerte- und Versorgungseinheit 2 mittels Feldspulenversorgungsleitungen 6 verbunden. Die Meßelektroden 5 sind mit der Auswerte- und Versorgungseinheit 2 mittels Meßelektrodenleitungen 7 verbunden.

In der Sensoreinheit 1 ist nun eine Sensordatenspeichereinheit 8 vorgesehen, in der spezifische Kenngrößen der Sensoreinheit 1 abgespeichert sind. Als spezifische Kenngrößen der Sensoreinheit 1 kommen insbesondere Abmessungen des magnetisch-induktiven Durchflußmeßgeräts, wie der Durchmesser des Meßrohrs 3, sowie Eichkonstanten in Betracht. Die Sensordatenspeichereinheit 8 ist, wie aus Fig. 2 ersichtlich, gemäß dem dargestellten bevorzugten Ausführungsbeispiel der Erfindung aus dem eigentlichen Speicher 9, nämlich einem EEPROM, und einer Ansteuerelektronik 10 für den Speicher 9 aufgebaut. Die Sensordatenspeichereinheit 8 ist, wie ebenfalls aus Fig. 2 ersichtlich, mittels der Feldspulenversorgungsleitungen 6 mit der Auswerte- und Versorgungseinheit 2 verbunden.

Dabei ist es, wie in Fig. 1 jeweils gestrichelt dargestellt, einerseits möglich, die Sensordatenspeichereinheit 8 in Reihe zu den Feldspulen 4 oder aber parallel zu den Feldspulen 4 anzuordnen. Wird die Sensordatenspeichereinheit 8 in Reihe zu den Feldspulen 4 geschaltet, so wird vorgesehen, daß die Sensordatenspeichereinheit 8 im Betrieb des magnetisch-induktiven Durchflußmeßgeräts, also wenn ein zeitlich alternierendes Magnetfeld von den Feldspulen 4 erzeugt wird, eine geringe Impedanz aufweist. Andererseits wird dann, wenn die Sensordatenspeichereinheit 8 parallel zu den Felspulen 4 geschaltet wird, vorgesehen, daß die Sensordatenspeichereinheit 8 im Betrieb des magnetisch-induktiven Durchflußmeßgeräts eine relativ große Impedanz aufweist. Durch diese Vorgehensweisen wird gewährleistet, daß die in die Feldspulenversorgungsleitungen 6 zwischengeschaltete Sensorspeichereinheit 8 den Feldspulenkreis möglichst wenig beeinflußt, indem nämlich die Verlustleistung, die in der in Reihe geschalteten Sensordatenspeichereinheit 8 anfällt bzw. über die parallel geschaltete Sensordatenspeichereinheit 8 an den Feldspulen 4 vorbeifließt, möglichst gering gehalten wird.

Aus Fig. 3 ist schließlich schematisch die Arbeitsweise der Sensordatenspeichereinheit 8 gemäß einem bevorzugten Ausführungsbeispiel der Erfindung ersichtlich. Nach dem Einschalten geht die Ansteuerelektronik 10 der Sensordatenspeichereinheit 8 in den aktiven Zustand. Es wird die Versorgungsspannung für den Speicher 9, typischerweise eine EEPROM, aufgebaut. Diese Phase ist in Fig. 3 mit I bezeichnet. Nach einer definierten Zeit geht die Sensordatenspeichereinheit 8 dann in den Datenübertragungsmodus, in Fig. 3 mit II bezeichnet. Im Datenübertragungsmodus werden die in der Sensordatenspeichereinheit 8 abgespeicherten spezifischen Kenngrößen der Sensoreinheit 1 an die Auswerte- und Versorgungseinheit 2 übertragen. Die Datenübertragung erfolgt in Form von Spannungsmodulationen, die von der Auswerte- und Versorgungseinheit 2 erfaßt und als Grundlage für die Durchflußberechnung verwendet werden. Nach Abschluß der Datenübertragung geht die Sensordatenspeichereinheit 8 automatisch in einen Zustand über, in dem der Feldspulenkreis wenig beeinflußt wird, indem nämlich, je nach Verschaltung des Sensordatenspeichereinheit 8, diese eine besonders hohe Impedanz (Parallelschaltung) oder aber eine besonders niedrige Impedanz (Reihenschaltung) aufweist. Sollte die Sensoreinheit 1 allerdings direkt mit einem zeitlich alternierenden Strom beaufschlagt werden, werden die in der Sensordatenspeichereinheit 8 abgespeicherten spezifischen Kenngrößen der Sensoreinheit 1 nicht an die Auswerte- und Versorgungseinheit 2 übertragen.

Um einen universellen Einsatz des magnetisch-induktiven Durchflußmeßgeräts zu ermöglichen, also auch einen Betrieb der Sensoreinheit 1 unter hohen Temperaturen, z. B. aufgrund einer heißen Flüssigkeit, zu gewährleisten, ist gemäß der dargestellten bevorzugten Ausführungsbeispiele der Erfindung vorgesehen, daß die Sensordatenspeichereinheit 8 in Hochtemperaturtechnologie ausgeführt ist.

## Patentansprüche

1. Magnetisch-induktives Durchflußmeßgerät für strömende Medien, mit einer Sensoreinheit (1) und einer Auswerte- und Versorgungseinheit (2), wobei die Sensoreinheit (1) ein Meßrohr (3), der Erzeugung eines zumindest im wesentlichen senkrecht zur Meßrohrachse verlaufenden und zeitlich alternierenden Magnetfelds dienende Feldspulen (4) und zwei entlang einer zumindest im wesentlichen senkrecht zur Meßrohrachse und senkrecht zur Magnetfeldrichtung angeordnete Meßelektroden (5) aufweist und die Feldspulen (4) der Sensoreinheit (1) mittels Feldspulenversorgungsleitungen (6) mit der Auswerte- und Versorgungseinheit (2) verbunden sind,
**dadurch gekennzeichnet,**
**daß** die Sensoreinheit (1) eine Sensordatenspeichereinheit (8) aufweist, in der spezifische Kenngrößen der Sensoreinheit (1) abgespeichert sind und von der die abgespeicherten spezifischen Kenngrößen an die Auswerte- und Versorgungseinheit (2) übertragbar sind.

2. Magnetisch-induktives Durchflußmeßgerät nach Anspruch 1, **dadurch gekennzeichnet, daß** die Sensordatenspeichereinheit (8) einen Speicher (9) und eine Ansteuerelektronik (10) für den Speicher (9) aufweist.

3. Magnetisch-induktives Durchflußmeßgerät nach Anspruch 1, **dadurch gekennzeichnet, daß** der Speicher (9) der Sensordatenspeichereinheit (8) von einem EEPROM gebildet wird.

4. Magnetisch-induktives Durchflußmeßgerät nach einem der Ansprüche 1 bis 3, **dadurch gekennzeichnet, daß** die Sensordatenspeichereinheit (8) mittels der Feldspulenversorgungsleitungen (6) mit der Auswerte- und Versorgungseinheit (2) verbunden ist.

5. Magnetisch-induktives Durchflußmeßgerät nach Anspruch 4, **dadurch gekennzeichnet, daß** die abgespeicherten spezifischen Kenngrößen von der Sensordatenspeichereinheit (8) über die Feldspulenleitungen (6) an die Auswerteund Versorgungseinheit (2) übertragbar sind.

6. Magnetisch-induktives Durchflußmeßgerät nach einem der Ansprüche 1 bis 5, **dadurch gekennzeichnet, daß** die abgespeicherten spezifischen Kenngrößen von der Sensordatenspeichereinheit (8) als Spannungsmodulationen an die Auswerte- und Versorgungseinheit (2) übertragbar sind.

7. Magnetisch-induktives Durchflußmeßgerät nach einem der Ansprüche 1 bis 6, **dadurch gekennzeichnet, daß** die Sensordatenspeichereinheit (8) in Reihe mit den Feldspulen (4) geschaltet ist.

8. Magnetisch-induktives Durchflußmeßgerät nach Anspruch 7, **dadurch gekennzeichnet, daß** die Sensordatenspeichereinheit (8) während des Betriebs der Feldspulen (4) mit einem alternierenden Magnetfeld eine geringe Impedanz aufweist.

9. Magnetisch-induktives Durchflußmeßgerät nach einem der Ansprüche 1 bis 6, **dadurch gekennzeichnet, daß** die Sensordatenspeichereinheit (8) parallel zu den Feldspulen (4) geschaltet ist.

10. Magnetisch-induktives Durchflußmeßgerät nach Anspruch 9, **dadurch gekennzeichnet, daß** die Sensordatenspeichereinheit während des Betriebs der Feldspulen (4) mit einem alternierenden Magnetfeld eine hohe Impedanz aufweist.

11. Magnetisch-induktives Durchflußmeßgerät nach einem der Ansprüche 1 bis 10, **dadurch gekennzeichnet, daß** die Sensordatenspeichereinheit (8) in Hochtemperaturtechnologie ausgeführt ist.
